# EUROPÄISCHE PATENTSCHRIFT

(11) **EP 3 637 155 B1**
(45) Veröffentlichungstag und Bekanntmachung des Hinweises auf die Patenterteilung: **01.01.2025**
(21) Anmeldenummer: 19190638.7
(22) Anmeldetag: 08.08.2019
(51) Int. Cl.: G01V 8/20

(54) **LICHTSCHRANKENANORDNUNG**
OPTICAL BARRIER DEVICE
SYSTÈME DE BARRIÈRE LUMINEUSE

(30) Priorität: 08.10.2018 DE 202018105747 U
(43) Veröffentlichungstag der Anmeldung: 15.04.2020
(73) Patentinhaber: Leuze electronic GmbH + Co. KG, 73277 Owen/Teck (DE)
(72) Erfinder: FELLER, Bernhard, 86316 Friedberg (DE); HARTL, Paul, 80797 München (DE); AUER, Robert, 85540 Haar (DE); OLBRICH, Sebastian, 80992 München (DE); HECKMAYR, Alexander, 86807 Buchloe (DE); HÖRDERICH, Johann, 82291 Mammendorf (DE)
(74) Vertreter: Ruckh, Rainer Gerhard

(56) Entgegenhaltungen:
- DE-A1- 4 033 234
- US-A- 5 347 135
- US-A- 5 635 724
- US-A1- 2006 065 818

## Beschreibung

Die Erfindung betrifft eine Lichtschrankenanordnung gemäß dem Oberbegriff des Anspruchs 1.

Derartige Lichtschrankenanordnungen können insbesondere als Lichtvorhang ausgebildet sein. Typischerweise sind bei derartigen Lichtschrankenanordnungen mehrere Sender in einer Linearanordnung in einem Gehäuse untergebracht, wobei insbesondere die Sender auf einer gemeinsamen Leiterplatte angeordnet sind. Entsprechend sind die Empfänger in einem weiteren Gehäuse angeordnet. Diese Gehäuse befinden sich an gegenüberliegenden Rändern eines Überwachungsbereichs, innerhalb dessen Objekte erfasst werden. Bei freiem Überwachungsbereich treffen die von den Sendern emittierten Lichtstrahlen ungehindert auf die jeweils zugeordneten Empfänger. Bei einem Objekteingriff wird der Strahlengang der Lichtstrahlen wenigstens eines Senders unterbrochen. Durch eine Auswertung der Empfangssignale der Empfänger wird in einer Auswerteeinheit ein binäres Objektfeststellungssignal generiert, dessen Schaltzustände angeben, ob sich ein Objekt im Überwachungsbereich befindet oder nicht.

Der Betrieb der Sender wird mit einer Sendersteuerung gesteuert. Typischerweise werden die Sender dadurch zyklisch einzeln nacheinander aktiviert. Typischerweise ist dabei jedem Sender eine Ansteuerschaltung als Bestandteil der Sendersteuerung zugeordnet. Dies bedingt einen unerwünscht hohen konstruktiven Aufwand.

Die US 5,347,135 A betrifft eine Sensoranordnung mit einer Mehrfachanordnung von Lichtstrahlen emittierenden Sendern und zugeordneten Empfängern.

Die Sender sind parallel an eine Ansteuerschaltung angeschlossen und können so einzeln aktiviert werden.

Die DE 40 33 234 A1 betrifft eine Schaltungsanordnung zur Ansteuerung von photoelektrischen Bauelementen einer Lichtschranke oder dergleichen, welche Bauelemente nacheinander mittels einer Umschalteinrichtung im Multiplexverfahren angesteuert werden. Weiterhin ist eine Funktionsfehler aufspürende Kontrolleinrichtung vorgesehen. Für einen einfachen Aufbau ist bei hoher Sicherheit vorgesehen, dass die photoelektrischen Bauelemente matrixförmig an den Ausgängen von Decodern angeschlossen sind, die mit voneinander unabhängigen, die Kontrolleinrichtung bildenden Prozessoren zusammenwirken.

Die US 2006/0065818 A1 betrifft einen Lichtvorhang mit einer Mehrfachanordnung von Lichtstrahlen emittierenden Sendern und Lichtstrahlen empfangenden Empfängern. Die Sender und Empfänger werden jeweils mit einer Ansteuerschaltung, die Schieberegister aufweist, angesteuert.

Die US 5 635 724 A betrifft eine Lichtschrankenanordnung mit einer Anordnung von Lichtstrahlen emittierenden Sendern und Lichtstrahlen empfangenden Empfängern. Die Sender werden einzeln von Transistoren gesteuert. Zwei Decoder steuern Gruppen von Transistoren, um einerseits einen Sender auszuwählen und andererseits eine Gruppe auszuwählen.

Der Erfindung liegt die Aufgabe zugrunde, eine Lichtschrankenanordnung bereitzustellen, mittels dieser bei geringem konstruktivem Aufwand eine flexible Ansteuerung der Sender ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Lichtschrankenanordnung zur Erfassung von Objekten in einem Überwachungsbereich mit einer Anordnung von Lichtstrahlen emittierenden Sendern und einer Anzahl von den Sendern zugeordneten Empfängern. Mit einer Sendersteuerung ist der Betrieb der Sender gesteuert. Die Sendersteuerung weist eine Anzahl von Ansteuerelementen auf, wobei mit jedem Ansteuerelement eine Gruppe von Sendern angesteuert ist. Die Sendersteuerung weist weiter eine Anzahl von Steuerelementen auf, wobei mit jedem Steuerelement jeweils nur ein Sender einer Gruppe angesteuert ist. Ein Sender emittiert nur dann Lichtstrahlen, wenn dieser durch das ihm zugeordnete Ansteuerelement und durch das ihm zugeordnete Steuerelement aktiviert ist. Die Ansteuerelemente sind in geringen Abständen zu den jeweils zugeordneten Sendern angeordnet. Die Steuerelemente sind in großen Abständen zu den Sendern der einzelnen Gruppen angeordnet. Dabei sind die Sender auf einer Leiterplatte angeordnet und die Ansteuerelemente sind mit den Sendern auf der Leiterplatte angeordnet. Alternativ sind jeweils auf einer Leiterplatte die Sender einer Gruppe und das zugeordnete Ansteuerelement angeordnet, wogegen die Steuerelemente hiervon räumlich getrennt angeordnet sind.

Die Sendersteuerung der erfindungsgemäßen Lichtschrankenanordnung weist einen kompakten, modularen Aufbau auf, mit der die einzelnen Sender derart angesteuert werden können, dass das Zeitverhalten der Aktivierung der einzelnen Sender flexibel vorgesehen werden kann.

Mit der erfindungsgemäßen Sendersteuerung können beispielsweise die Sender der Lichtschrankenanordnung zyklisch einzeln nacheinander aktiviert werden. Alternativ können mehrere Sender auch gleichzeitig aktiviert werden, wodurch die Zykluszeit der Aktivierung der Sender verkürzt werden kann. Dabei werden vorzugsweise die zwei benachbarten Sender gleichzeitig aktiviert, wodurch gegenseitige Beeinflussungen von Sendern auf einfache Weise vermieden werden können.

Ein wesentlicher Vorteil der erfindungsgemäßen Sendersteuerung ist deren konstruktiv einfacher Aufbau.

Dabei ist vorteilhaft, dass die Sender in Gruppen zusammengefasst sind und alle Sender einer Gruppe von nur einem Ansteuerelement angesteuert sind. Dies stellt eine erhebliche schaltungstechnische Vereinfachung gegenüber bekannten Lichtschrankenanordnungen dar, wo jedem Sender ein separates Ansteuerelement zugeordnet ist.

Erfindungsgemäß ist eine Anzahl von Steuerelementen vorgesehen, mittels derer, bevorzugt für alle Gruppen von Sendern, jeweils genau ein Sender einer Gruppe angesteuert wird.

Durch die so in den Ansteuerelementen und den Steuerelementen gebildete matrixförmige Ansteuerung der Sender der Lichtschrankenanordnung können diese einzeln oder zu mehreren gleichzeitig zu vorgegebenen Zeiten aktiviert werden, wodurch mit einer geringen Anzahl von Bauteilen die Sender flexibel aktiviert werden können.

Gemäß einer vorteilhaften Ausgestaltung sind mehrere identische Ansteuerelemente vorgesehen. Allen Ansteuerelementen ist dieselbe Anzahl von Sendern als Gruppe zugeordnet.

Dann ist es vorteilhaft, dass jedes Steuerelement in allen Gruppen jeweils einen Sender ansteuert.

Dabei entspricht die Anzahl der Steuerelemente der Anzahl der Sender einer einem Ansteuerelement zugeordneten Gruppe.

So kann mit den Steuerelementen und Ansteuerelementen auf eine besonders einfache Weise eine gezielte Einzelaktivierung von Sendern erfolgen.

Besonders vorteilhaft weist die Sendersteuerung ein Steuermodul auf, mittels dessen der Betrieb der Ansteuerelemente und der Steuerelemente gesteuert ist.

Dabei sind bevorzugt zur Ansteuerung der Steuerelemente und/oder der Ansteuerelemente Schieberegisterelemente und/oder eine Modulationsleitung vorgesehen.

Auf diese Weise kann das Zeitverhalten der Aktivierungen der Sender besonders einfach vorgegeben werden.

Gemäß einer konstruktiv besonders vorteilhaften Ausführungsform weist jedes Ansteuerelement ein Schaltelement zur Ansteuerung der jeweiligen Gruppe von Sendern auf.

Weiterhin weist jedes Steuerelement ein Schaltelement zur Ansteuerung jeweils eines Senders seiner Gruppe auf.

Dabei sind die Schaltelemente jeweils von einem Transistor gebildet.

Die Erfassung von Objekten im Überwachungsbereich erfolgt bei der erfindungsgemäßen Lichtschrankenanordnung generell nach dem Lichtschrankenprinzip. Die Sender einerseits und die Empfänger andererseits sind an gegenüberliegenden Rändern des Überwachungsbereichs so angeordnet, dass bei freiem Überwachungsbereich die Lichtstrahlen der Sender ungehindert auf dessen zugeordneten Empfänger treffen. Bei einem Objekteingriff in den Überwachungsbereich wird wenigstens die Strahlachse der Lichtstrahlen eines der Sender unterbrochen, was in einer Auswerteeinheit durch eine Amplitudenbewertung der Empfangssignale festgestellt wird.

Erfindungsgemäß sind die Ansteuerelemente in geringen Abständen zu den jeweils zugeordneten Sendern angeordnet.

Im Gegensatz hierzu sind die Steuerelemente in großen Abständen zu den Sendern der einzelnen Gruppen angeordnet.

Typischerweise befinden sich die Ansteuerelemente zum jeweiligen Sender in einem geringen Abstand von einem oder einigen wenigen Zentimeter, während die Steuerelemente in Abständen von mehr als 10 Zentimeter oder sogar bis zu einigen Metern von den Sendern entfernt sein können.

Erfindungsgemäß sind die Sender auf einer Leiterplatte angeordnet.

Die Ansteuerelemente sind mit den Sendern auf der Leiterplatte angeordnet, wogegen die Steuerelemente hiervon räumlich getrennt angeordnet sind.

Alternativ sind die Sender auf mehreren Leiterplatten verteilt angeordnet, wobei auf einer Leiterplatte die Sender einer Gruppe und das zugeordnete Ansteuerelement angeordnet sind.

Vorteilhaft sind die Sender von Leuchtdioden gebildet, die Lichtstrahlen im sichtbaren oder unsichtbaren Wellenlängenbereich emittieren.

Die Leuchtdioden bilden kostengünstige Standardbauteile, so dass damit geringe Herstellkosten der Lichtschrankenanordnung realisiert werden können.

Zur Strahlformung der Lichtstrahlen ist jedem Sender eine Sendeoptik zugeordnet.

Gemäß einer ersten Variante ist jedem Sender eine separate Sendeoptik zugeordnet.

Gemäß einer zweiten Variante sind jeweils mehrere Sender zu Modulen zusammengefasst, welchen eine gemeinsame Sendeoptik zugeordnet ist.

Generell ist es auch möglich auf Sendeoptiken völlig zu verzichten, insbesondere dann, wenn Sender bildende Leuchtdioden eine integrierte Optik aufweisen.

Besonders vorteilhaft ist die Lichtschrankenanordnung als Lichtvorhang ausgebildet. Die Sender mit der Sendersteuerung sind dann in einem ersten Gehäuse, die Empfänger und eine diesen zugeordneten Auswerteeinheit sind in einem zweiten Gehäuse integriert. Mit der Auswerteeinheit wird in Abhängigkeit der Empfangssignale der Empfänger ein binäres Objektfeststellungssignal generiert, dessen Schaltzustände angeben, ob sich ein Objekt im Überwachungsbereich befindet oder nicht.

Die Aktivierung der Sender erfolgt mit der Sendersteuerung derart, dass die Sender einzeln oder in Gruppen zyklisch nacheinander aktiviert werden. Die Empfänger können dauerhaft aktiviert sein. Alternativ werden durch eine optische Synchronisation über die Lichtstrahlen der Sender die Sender und die diesen zugeordneten Empfänger gleichzeitig aktiviert.

Weiter vorteilhaft ist die Lichtschrankenanordnung als Sicherheitssensor ausgebildet.

Damit kann die Lichtschrankenanordnung in sicherheitstechnischen Anwendungen, insbesondere im Bereich des Personenschutzes, eingesetzt werden. Hierzu weist die Lichtschrankenanordnung einen fehlersicheren Aufbau auf, was insbesondere dadurch realisiert wird, dass die Auswerteeinheit der Lichtschrankenanordnung einen redundanten Aufbau aufweist, insbesondere in Form zweier sich gegenseitig zyklisch überwachenden Rechnereinheiten.

Die Erfindung wird im Folgenden anhand der Zeichnungen erläutert. Es zeigen:
- Figur 1:: Schematische Darstellung eines Ausführungsbeispiels der erfindungsgemäßen Lichtstrahlenanordnung in Form eines Lichtvorhangs.
- Figur 2:: Erstes Ausführungsbeispiel einer Sendersteuerung für den Lichtvorhang gemäß Figur 1.
- Figur 3:: Zweites Ausführungsbeispiel einer Sendersteuerung für den Lichtvorhang gemäß Figur 1.

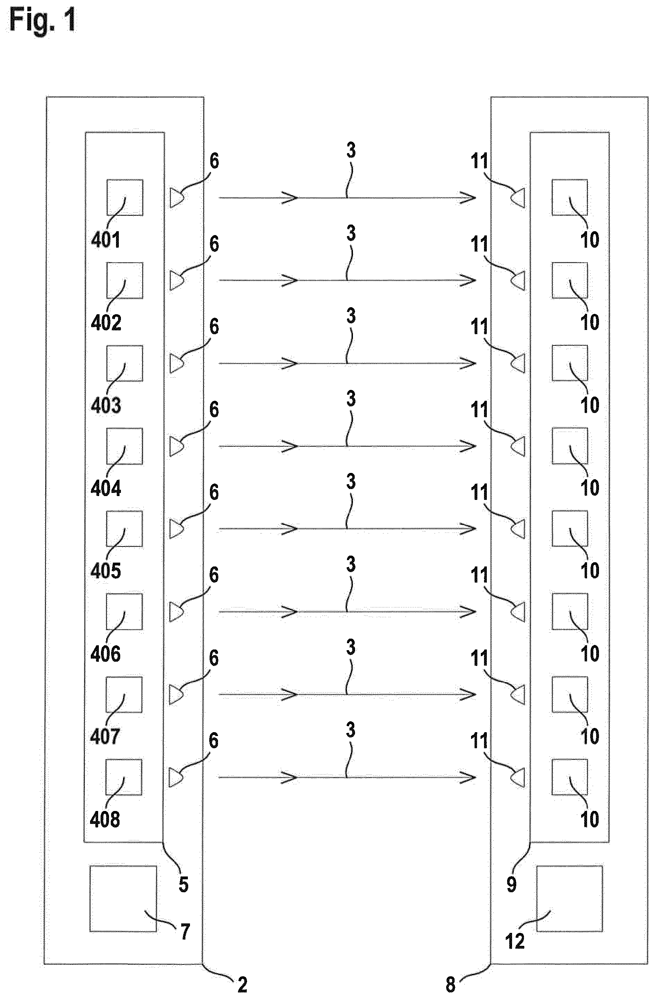

Figur 1 zeigt ein Ausführungsbeispiel der erfindungsgemäßen Lichtschrankenanordnung eines Lichtvorhangs 1 zur Erfassung von Objekten in einem Überwachungsbereich.

Der Lichtvorhang 1 weist ein erstes Gehäuse 2 auf, in dem eine Anzahl von Lichtstrahlen 3 emittierenden Sendern 401, 402, 403, 404, 405, 406, 407, 408 angeordnet ist. Im vorliegenden Fall sind acht Sender 401, 402, 403, 404, 405, 406, 407, 408 vorgesehen. Natürlich kann der Lichtvorhang 1 auch eine andere Anzahl von Sendern 401, 402, 403, 404, 405, 406, 407, 408 aufweisen. Die vorzugsweise identisch ausgebildeten Sender 401, 402, 403, 404, 405, 406, 407, 408 sind von Leuchtdioden gebildet, die Licht im sichtbaren oder unsichtbaren Bereich, insbesondere Infrarot-Bereich, emittieren.

Alle Sender 401, 402, 403, 404, 405, 406, 407, 408 sind in einer Linearanordnung auf einer Leiterplatte 5 angeordnet. Jedem Sender 401, 402, 403, 404, 405, 406, 407, 408 ist zur Strahlformung deren Lichtstrahlen 3 eine Sendeoptik 6 in Form einer Linse vorgeordnet. Alternativ können für mehrere Sender 401, 402, 403, 404, 405, 406, 407, 408 jeweils eine gemeinsame Sendeoptik 6 vorgesehen sein.

Der Betrieb der Sender 401, 402, 403, 404, 405, 406, 407, 408 wird mit einer Sendersteuerung 7 gesteuert.

Der Lichtvorhang 1 umfasst weiterhin ein zweites Gehäuse 8, in dem auf einer weiteren Leiterpatte 9 eine Anzahl von Empfängern 10 vorgesehen ist. Die Anzahl der Empfänger 10 entspricht der Anzahl der Sender 401, 402, 403, 404, 405, 406, 407, 408. Die im vorliegenden Fall identisch ausgebildeten Empfänger 10 sind von Photodioden gebildet. Jedem Empfänger 10 ist eine Empfangsoptik 11 zugeordnet. Die am Ausgang der Empfänger 10 anstehenden Empfangssignale werden in einer Auswerteeinheit 12 ausgewertet.

Der Lichtvorhang 1 ist im vorliegenden Fall als Sicherheitssensor ausgebildet und weist einen fehlersichereren Aufbau auf. Hierzu ist die Auswerteeinheit 12 redundant zweikanalig aufgebaut, in Form zweier sich gegenseitig zyklisch überwachenden Rechnereinheiten.

Die beiden Gehäuse 2, 8 des Lichtvorhangs 1 sind in gegenüberliegenden Rändem des Überwachungsbereichs so angeordnet, dass bei freiem Überwachungsbereich (wie in Figur 1 dargestellt) die Lichtstrahlen 3 jedes Senders 401, 402, 403, 404, 405, 406, 407, 408 ungehindert auf den zugeordneten Empfänger 10 treffen. Die so gebildeten Sender-Empfängerpaare bilden Strahlachsen des Lichtvorhangs 1, mit welchen der Überwachungsbereich überwacht wird. Ein Objekteingriff in den Überwachungsbereich wird dadurch erfasst, dass die Lichtstrahlen 3 wenigstens einer Strahlachse zumindest teilweise unterbrochen sind. Hierzu erfolgt in der Auswerteeinheit 12 eine Schwellwertbewertung der Amplituden der Empfangssignale der Empfänger 10. Abhängig hiervon wird in der Auswerteeinheit 12 binäres Objektfeststellungssignal generiert, dessen Schaltzustände angeben, ob sich ein Objekt im Überwachungsbereich befindet oder nicht.

Anstelle der Ausbildung in Form eines Lichtvorhangs 1 kann die Lichtschrankenanordnung auch aus einer Anzahl von einzelnen Lichtschranken bestehen, deren Sender 401, 402, 403, 404, 405, 406, 407, 408 gemeinsam gesteuert und deren Empfänger 10 Empfangssignale generieren, die gemeinsam ausgewertet werden.

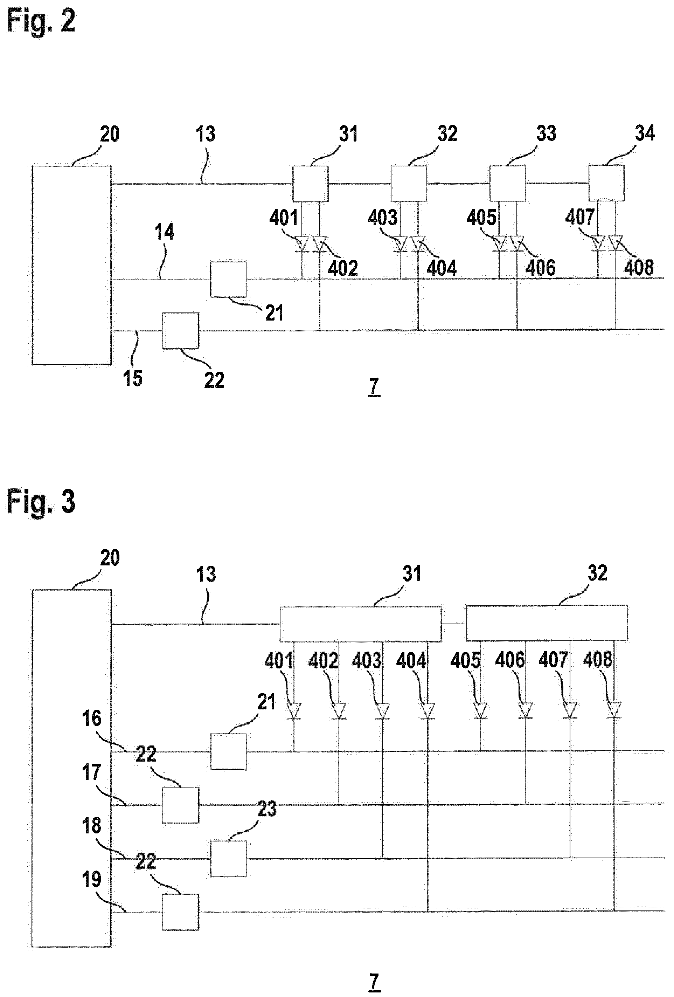

Figur 2 zeigt ein erstes Ausführungsbeispiel der erfindungsgemäßen Sendersteuerung 7. Die Sendersteuerung 7 umfasst ein Steuermodul 20 und an diese über Steuerleitungen 13, 14, 15 angeschlossene Ansteuerelemente 31, 32, 33 ,34 und Steuerelemente 21, 22.

Das Steuermodul 20 besteht aus einem Mikroprozessor oder dergleichen, die Ansteuerelemente 31, 32, 33, 34 und die Steuerelemente 21,22 bestehen vorteilhaft aus einzelnen Schaltelementen, insbesondere Transistoren.

Bei dieser Ausführungsform sind vier identische Ansteuerelemente 31, 32, 33, 34 vorgesehen. Eine Steuerleitung 13 ist vom Steuermodul 20 ausgehend zu allen Ansteuerelemente 31, 32, 33, 34 durchgeschleift, so dass die Ansteuerelemente 31, 32, 33, 34 eine an das Steuermodul 20 angeschlossene Reihenschaltung bilden. Die Steuerelemente 21, 22 sind über Steuerleitungen 14, 15 parallel an das Steuermodul 20 angeschlossen. Die Steuerleitungen 13, 14, 15 können als Modulationsleitungen ausgebildet sein. Alternativ können Schieberegisterelemente zur Ansteuerung der Ansteuerelemente 31, 32, 33, 34 beziehungsweise Steuerelemente 21, 22 vorgesehen sein.

Mit dem Steuermodul 20 werden die Steuerelemente 21, 22 und Ansteuerelemente 31, 32, 33, 34 angesteuert, wodurch das Zeitverhalten der Aktivierung der Sender 401, 402, 403, 404, 405, 406, 407, 408 vorgebbar ist.

Wie Figur 2 zeigt, ist an jedes Ansteuerelement 31, 32, 33, 34 eine Gruppe von zwei Sendern 401, 402 und 403, 404 und 405, 406 und 407, 408 angeschlossen, so dass jedes Ansteuerelement 31, 32, 33, 34 eine solche Gruppe von Sendern 401, 402 und 403, 404 und 405, 406 und 407, 408 ansteuert.

Weiterhin sind zwei Steuerelemente 21, 22 vorgesehen, die über das Steuermodul 20 gesteuert werden. Dabei ist ein Steuerelement 21, 22 mit jeweils nur dem ersten Sender 401, 403, 405, 407 aller Gruppen verbunden. Das zweite Steuerelement 21, 22 ist mit jeweils dem zweiten Sender 402, 404, 406, 408 aller Gruppen verbunden.

Die Steuerelemente 21, 22 und Ansteuerelemente 31, 32, 33, 34 bilden eine matrixförmige Ansteuerschaltung für die Sender 401, 402, 403, 404, 405, 406, 407, 408, wobei jeder Sender 401, 402, 403, 404, 405, 406, 407, 408 mit einer spezifischen, individuellen Kombination nur eines Ansteuerelements 31, 32, 33, 34 und nur eines Steuerelements 21, 22 verbunden ist.

Ein Sender 401, 402, 403, 404, 405, 406, 407, 408 ist nur dann aktiviert und sendet Lichtstrahlen 3 aus, wenn er von dem Ansteuerelement 31, 32, 33, 34 und dem Steuerelement 21, 22, an welchem dieser angeschlossen ist, entsprechend angesteuert wird.

Durch die Ansteuerelemente 31, 32, 33, 34 und Steuerelemente 21, 22 kann das Zeitverhalten der Aktivierungen der einzelnen Sender 401, 402, 403, 404, 405, 406, 407, 408 flexibel gesteuert werden. Insbesondere können die Sender 401, 402, 403, 404, 405, 406, 407, 408 einzeln oder in Gruppen zyklisch nacheinander aktiviert werden.

Generell kann die Sendersteuerung 7 dahingehend variiert werden, dass an jedes Ansteuerelement 31, 32, 33, 34 N (wobei N > 2) Sender 401, 402, 403, 404, 405, 406, 407, 408 angeschlossen sind und eine Gruppe von Sendern 401, 402, 403, 404, 405, 406, 407, 408 bilden. Dann sind N Steuerelemente vorgesehen, mit welchen jeweils ein Sender jeder Gruppe verbunden ist.

Ein entsprechendes Ausführungsbeispiel zeigt Figur 3. Diese Sendersteuerung 7 weist zwei Ansteuerelemente 31, 32 auf, die über die Steuerleitung 13 mit dem Steuermodul 20 verbunden sind. In jedes Ansteuerelement 31, 32 ist eine Gruppe von vier Sendern 401, 402, 403, 404 und 405, 406, 407, 408 angeschlossen. Dementsprechend sind diesen Gruppen vier Steuerelemente 21, 22, 23, 24 zugeordnet, die jeweils über eine Steuerleitung 16, 17, 18, 19 mit dem Steuermodul 20 verbunden sind. Jedes Steuerelement 21, 22, 23, 24 ist mit genau einem Sender 401, 402, 403, 404, 405, 406, 407, 408 jeder Gruppe verbunden. Dabei sind die einzelnen Steuerelemente 21, 22, 23, 24 mit jeweils verschiedenen Sendern 401, 402, 403, 404, 405, 406, 407, 408 verbunden, so dass mit den Steuerelementen 21, 22, 23, 24 und Ansteuerelementen 31,32 wieder eine matrixförmige Anordnung der Sender 401, 402, 403, 404, 405, 406, 407, 408 derart erhalten wird, dass jeder Sender 401, 402, 403, 404, 405, 406, 407, 408 von einer individuellen Kombination genau eines Ansteuerelements 31, 32 und genau eines Steuerelements 21, 22, 23, 24 gesteuert wird. Die Funktionsweise der Sendersteuerung 7 gemäß Figur 3 ist analog zur Sendersteuerung 7 gemäß Figur 2.

### Bezugszeichenliste

- (1): Lichtvorhang
- (2): Gehäuse
- (3): Lichtstrahlen
- (5): Leiterplatte
- (6): Sendeoptik
- (7): Sendersteuerung
- (8): Gehäuse
- (9): Leiterplatte
- (10): Empfänger
- (11): Empfangsoptik
- (12): Auswerteeinheit
- (13): Steuerleitung
- (14): Steuerleitung
- (15): Steuerleitung
- (16): Steuerleitung
- (17): Steuerleitung
- (18): Steuerleitung
- (19): Steuerleitung
- (20): Steuermodul
- (21): Steuerelement
- (22): Steuerelement
- (23): Steuerelement
- (24): Steuerelement
- (31): Ansteuerelement
- (32): Ansteuerelement
- (33): Ansteuerelement
- (34): Ansteuerelement
- (401): Sender
- (402): Sender
- (403): Sender
- (404): Sender
- (405): Sender
- (406): Sender
- (407): Sender
- (408): Sender

## Patentansprüche

1. Lichtschrankenanordnung zur Erfassung von Objekten in einem Überwachungsbereich mit einer Anordnung von Lichtstrahlen (3) emittierenden Sendern (401, 402, 403, 404, 405, 406, 407, 408) und einer Anzahl von den Sendern (401, 402, 403, 404, 405, 406, 407, 408) zugeordneten Empfängern (10), mit einer Sendersteuerung (7), mit der der Betrieb der Sender (401, 402, 403, 404, 405, 406, 407, 408) gesteuert ist, wobei die Sendersteuerung (7) eine Anzahl von Ansteuerelementen (31, 32, 33, 34) aufweist, wobei mit jedem Ansteuerelement (31, 32, 33, 34) eine Gruppe von Sendern (401, 402 und 403, 404 und 405, 406 und 407, 408) angesteuert ist, und mit einer Anzahl von Steuerelementen (21, 22, 23, 24), wobei mit jedem Steuerelement (21, 22, 23, 24) jeweils nur ein Sender (401, 402, 403, 404, 405, 406, 407, 408) einer Gruppe angesteuert ist, wobei ein Sender (401, 402, 403, 404, 405, 406, 407, 408) nur dann Lichtstrahlen (3) emittiert, wenn dieser durch das ihm zugeordnete Ansteuerelement (31, 32, 33, 34) und durch das ihm zugeordnete Steuerelement (21, 22, 23, 24) aktiviert ist, die Ansteuerelemente (31, 32, 33, 34) in geringen Abständen zu den jeweils zugeordneten Sendern (401, 402, 403, 404, 405, 406, 407, 408) angeordnet sind, und die Steuerelemente (21, 22, 23, 24) in großen Abständen zu den Sendern (401, 402, 403, 404, 405, 406, 407, 408) der einzelnen Gruppen angeordnet sind, wobei die Sender (401, 402, 403, 404, 405, 406, 407, 408) auf einer Leiterplatte angeordnet sind und die Ansteuerelemente (31, 32, 33, 34) mit den Sendern (401, 402, 403, 404, 405, 406, 407, 408) auf der Leiterplatte angeordnet sind oder jeweils auf einer Leiterplatte die Sender einer Gruppe und das zugeordnete Ansteuerelement (31, 32, 33, 34) angeordnet sind, wogegen die Steuerelemente (21, 22, 23, 24) hiervon räumlich getrennt angeordnet sind.

2. Lichtschrankenanordnung nach Anspruch 1, **dadurch gekennzeichnet, dass** mehrere identische Ansteuerelemente (31, 32, 33, 34) vorgesehen sind, wobei allen Ansteuerelementen (31, 32, 33, 34) dieselbe Anzahl von Sendern (401, 402, 403, 404, 405, 406, 407, 408) als Gruppe zugeordnet ist.

3. Lichtschrankenanordnung nach einem der Ansprüche 1 oder 2, **dadurch gekennzeichnet, dass** jedes Steuerelement (21, 22, 23, 24) in allen Gruppen jeweils einen Sender (401, 402, 403, 404, 405, 406, 407, 408) ansteuert.

4. Lichtschrankenanordnung nach Anspruch 3, **dadurch gekennzeichnet, dass** die Anzahl der Steuerelemente (21, 22, 23, 24) der Anzahl der Sender (401, 402, 403, 404, 405, 406, 407, 408) einer einem Ansteuerelement (31, 32, 33, 34) zugeordneten Gruppe entspricht.

5. Lichtschrankenanordnung nach einem der Ansprüche 1 - 4, **dadurch gekennzeichnet, dass** die Sendersteuerung (7) ein Steuermodul (20) aufweist, mittels dessen der Betrieb der Ansteuerelemente (31, 32, 33, 34) und der Steuerelemente (21, 22, 23, 24) gesteuert ist.

6. Lichtschrankenanordnung nach einem der Ansprüche 1 - 5, **dadurch gekennzeichnet, dass** zur Ansteuerung der Steuerelemente (21, 22, 23, 24) und/oder der Ansteuerelemente (31, 32, 33, 34) Schieberegisterelemente und/oder eine Modulationsleitung vorgesehen sind.

7. Lichtschrankenanordnung nach einem der Ansprüche 1 - 6, **dadurch gekennzeichnet, dass** jedes Ansteuerelement (31, 32, 33, 34) ein Schaltelement zur Ansteuerung der jeweiligen Gruppe von Sendern (401, 402, 403, 404, 405, 406, 407, 408) aufweist.

8. Lichtschrankenanordnung nach einem der Ansprüche 1 - 7, **dadurch gekennzeichnet, dass** jedes Steuerelement (21, 22, 23, 24) ein Schaltelement zur Ansteuerung jeweils eines Senders (401, 402, 403, 404, 405, 406, 407, 408) seiner Gruppe aufweist.

9. Lichtschrankenanordnung nach einem der Ansprüche 1 bis 8, **dadurch gekennzeichnet, dass** die Sender (401, 402, 403, 404, 405, 406, 407, 408) von Leuchtdioden gebildet sind, die Lichtstrahlen (3) im sichtbaren oder unsichtbaren Wellenlängenbereich emittieren.

10. Lichtschrankenanordnung nach einem der Ansprüche 1 bis 9, **dadurch gekennzeichnet, dass** jedem Sender (401, 402, 403, 404, 405, 406, 407, 408) eine Sendeoptik (6) zugeordnet ist, wobei jedem Sender (401, 402, 403, 404, 405, 406, 407, 408) eine separate Sendeoptik (6) zugeordnet ist, oder dass jeweils mehrere Sender (401, 402, 403, 404, 405, 406, 407, 408) zu Modulen zusammengefasst sind, welchen eine gemeinsame Sendeoptik (6) zugeordnet ist.

11. Lichtschrankenanordnung nach einem der Ansprüche 1 bis 10, **dadurch gekennzeichnet, dass** diese als Lichtvorhang (1) ausgebildet ist.

12. Lichtschrankenanordnung nach einem der Ansprüche 1 bis 11, **dadurch gekennzeichnet, dass** diese als Sicherheitssensor ausgebildet ist.

## Claims

1. An optical barrier device for detecting objects in a monitoring area with an arrangement of transmitters (401, 402, 403, 404, 405, 406, 407, 408) emitting light beams (3) and a number of receivers (10) assigned to the transmitters (401, 402, 403, 404, 405, 406, 407, 408), with a transmitter control (7) with which the operation of the transmitters (401, 402, 403, 404, 405, 405, 406, 407, 408) can be controlled, 408), with a transmitter controller (7), with which the operation of the transmitters (401, 402, 403, 404, 405, 406, 407, 408) is controlled, wherein the transmitter controller (7) has a number of control elements (31, 32, 33, 34), wherein with each control element (31, 32, 33, 34) a group of transmitters (401, 402 and 403, 404 and 405, 406 and 407, 408) is controlled, and with a number of control elements (21, 22, 23, 24), wherein with each control element (21, 22, 23, 24) only one transmitter (401, 402, 403, 404, 405, 406, 407, 408) of a group is controlled in each case, wherein a transmitter (401, 402, 403, 404, 405, 406, 407, 408) only emits light beams (3) when it is activated by the control element (31, 32, 33, 34) assigned to it and by the control element (21, 22, 23, 24) assigned to it, the control elements (31, 32. 33, 34) are arranged at small distances from the respectively assigned transmitters (401, 402, 403, 404, 405, 406, 407, 408), and the control elements (21, 22, 23, 24) are arranged at large distances from the transmitters (401, 402, 403, 404, 405, 406, 407, 408) of the individual groups, wherein the transmitters (401, 402, 403, 404, 405, 406, 407, 408) are arranged on a printed circuit board and the control elements (31, 32, 33, 34) with the transmitters (401, 402, 403, 404, 405, 406, 407, 408) are arranged on the printed circuit board or the transmitters of a group and the associated control element (31, 32, 33, 34) are each arranged on a printed circuit board, whereas the control elements (21, 22, 23, 24) are arranged spatially separated therefrom.

2. An optical barrier device according to claim 1, **characterised in that** a plurality of identical actuating elements (31, 32, 33, 34) are provided, wherein the same number of transmitters (401, 402, 403, 404, 405, 406, 407, 408) is assigned as a group to all actuating elements (31, 32, 33, 34).

3. An optical barrier device according to one of claims 1 or 2, **characterised in that** each control element (21, 22, 23, 24) controls a respective transmitter (401, 402, 403, 404, 405, 406, 407, 408) in all groups.

4. An optical barrier device according to claim 3, **characterised in that** the number of control elements (21, 22, 23, 24) corresponds to the number of transmitters (401, 402, 403, 404, 405, 406, 407, 408) of a group assigned to a control element (31, 32, 33, 34).

5. An optical barrier device according to one of claims 1-4, **characterised in that** the transmitter control (7) has a control module (20), by means of which the operation of the actuating elements (31, 32, 33, 34) and the control elements (21, 22, 23, 24) is controlled.

6. An optical barrier device according to one of claims 1-5, **characterised in that** shift register elements and/or a modulation line are provided for actuating the control elements (21, 22, 23, 24) and/or the actuating elements (31, 32, 33, 34).

7. An optical barrier device according to one of claims 1-6, **characterised in that** each actuating element (31, 32, 33, 34) has a switching element for actuating the respective group of transmitters (401, 402, 403, 404, 405, 406, 407, 408).

8. An optical barrier device according to one of claims 1-7, **characterised in that** each control element (21, 22, 23, 24) has a switching element for activating a respective transmitter (401, 402, 403, 404, 405, 406, 407, 408) of its group.

9. An optical barrier device according to one of claims 1 to 8, **characterised in that** the transmitters (401, 402, 403, 404, 405, 406, 407, 408) are formed by light emitting diodes which emit light beams (3) in the visible or invisible wavelength range.

10. An optical barrier device according to one of claims 1 to 9, **characterised in that** each transmitter (401, 402, 403, 404, 405, 406, 407, 408) is assigned an optical transmitter (6), wherein each transmitter (401, 402, 403, 404, 405, 406, 407, 408) is assigned a separate transmitting optical system (6), or **in that** a plurality of transmitters (401, 402, 403, 404, 405, 406, 407, 408) are combined to form modules which are assigned a common transmitting optical system (6).

11. An optical barrier device according to one of claims 1 to 10, **characterised in that** it is designed as a light curtain (1).

12. An optical barrier device according to one of claims 1 to 11, **characterised in that** it is designed as a safety sensor.

## Revendications

1. Système de barrière lumineuse pour la détection d'objets dans une zone de surveillance avec un arrangement d'émetteurs (401, 402, 403, 404, 405, 406, 407, 408) émettant des faisceaux lumineux (3) et un certain nombre de récepteurs (10) affectés aux émetteurs (401, 402, 403, 404, 405, 406, 407, 408), avec une commande d'émetteur (7) permettant de commander le fonctionnement des émetteurs (401, 402, 405, 407, 408), avec une commande d'émetteur (7) permettant de commander le fonctionnement des émetteurs (401, 402, 403, 404, 405, 405, 406, 407, 408), avec une commande d'émetteur (7), avec laquelle le fonctionnement des émetteurs (401, 402, 403, 404, 405, 406, 407, 408) est commandé, dans laquelle la commande d'émetteur (7) a un certain nombre d'éléments de commande (31, 32, 33, 34), dans lequel chaque élément de commande (31, 32, 33, 34) commande un groupe d'émetteurs (401, 402 et 403, 404 et 405, 406 et 407, 408), et avec un certain nombre d'éléments de commande (21, 22, 23, 24), dans lequel chaque élément de commande (21, 22, 23, 24) commande un seul émetteur (401, 402, 403, 404, 405, 406, 407, 408), et avec un certain nombre d'éléments de commande (21, 22, 23, 24), dans lequel chaque élément de commande (21, 22, 23, 24) commande un seul émetteur (401, 402, 403, 404, 405, 406, 407, 408) d'un groupe, dans lequel un émetteur (401, 402, 403, 404, 405, 406, 407, 408) n'émet des faisceaux lumineux (3) que lorsqu'il est activé par l'élément de commande (31, 32, 33, 34) qui lui est affecté et par l'élément de commande (21, 22, 23, 24) qui lui est affecté, les éléments de commande (31, 32, 33, 34) étant disposés à de petites distances les uns des autres, et les émetteurs (401, 402, 403, 404, 405, 406, 407, 408) à de petites distances les uns des autres. 33, 34) sont disposés à faible distance des émetteurs (401, 402, 403, 404, 405, 406, 407, 408) qui leur sont respectivement attribués, et les éléments de commande (21, 22, 23, 24) sont disposés à grande distance des émetteurs (401, 402, 403, 404, 405, 406, 407, 408) des différents groupes, les émetteurs (401, 402, 403, 404, 405, 406, 407, 408) sont disposés sur une carte de circuit imprimé et les éléments de commande (31, 32, 33, 34) avec les émetteurs (401, 402, 403, 404, 405, 406, 407, 408) sont disposés sur la carte de circuit imprimé ou les émetteurs d'un groupe et l'élément de commande associé (31, 32, 33, 34) sont chacun disposés sur une carte de circuit imprimé, tandis que les éléments de commande (21, 22, 23, 24) sont disposés dans l'espace à partir de celle-ci.

2. Système de barrière lumineuse selon la revendication 1, **caractérisé en ce que** plusieurs éléments d'actionnement identiques (31, 32, 33, 34) sont prévus, le même nombre d'émetteurs (401, 402, 403, 404, 405, 406, 407, 408) étant attribué en tant que groupe à tous les éléments d'actionnement (31, 32, 33, 34).

3. Système de barrière lumineuse selon l'une des revendications 1 ou 2, **caractérisé en ce que** chaque élément de commande (21, 22, 23, 24) commande un émetteur respectif (401, 402, 403, 404, 405, 406, 407, 408) dans tous les groupes.

4. Système de barrière lumineuse selon la revendication 3, **caractérisé en ce que** le nombre d'éléments de commande (21, 22, 23, 24) correspond au nombre d'émetteurs (401, 402, 403, 404, 405, 406, 407, 408) d'un groupe affecté à un élément de commande (31, 32, 33, 34).

5. Barrière lumineuse selon l'une des revendications 1 à 4, **caractérisée en ce que** la commande de l'émetteur (7) comporte un module de commande (20) qui permet de commander le fonctionnement des éléments d'actionnement (31, 32, 33, 34) et des éléments de commande (21, 22, 23, 24).

6. Système de barrière lumineuse selon l'une des revendications 1 à 5, **caractérisé en ce que** des éléments de registre à décalage et/ou une ligne de modulation sont prévus pour actionner les éléments de commande (21, 22, 23, 24) et/ou les éléments d'actionnement (31, 32, 33, 34).

7. Système de barrière lumineuse selon l'une des revendications 1 à 6, **caractérisé en ce que** chaque élément d'actionnement (31, 32, 33, 34) comporte un élément de commutation pour actionner le groupe respectif d'émetteurs (401, 402, 403, 404, 405, 406, 407, 408).

8. Système de barrière lumineuse selon l'une des revendications 1 à 7, **caractérisé en ce que** chaque élément de commande (21, 22, 23, 24) possède un élément de commutation pour activer un émetteur respectif (401, 402, 403, 404, 405, 406, 407, 408) de son groupe.

9. Système de barrière lumineuse selon l'une des revendications 1 à 8, **caractérisé en ce que** les émetteurs (401, 402, 403, 404, 405, 406, 407, 408) sont constitués de diodes électroluminescentes qui émettent des faisceaux lumineux (3) dans la gamme des longueurs d'onde visibles ou invisibles.

10. Système de barrière lumineuse selon l'une des revendications 1 à 9, **caractérisé en ce que** chaque émetteur (401, 402, 403, 404, 405, 406, 407, 408) est associé à un émetteur optique (6), où chaque émetteur (401, 402, 403, 404, 405, 406, 407, 408) se voit attribuer un système optique de transmission séparé (6), ou **en ce qu'**une pluralité d'émetteurs (401, 402, 403, 404, 405, 406, 407, 408) sont combinés pour former des modules auxquels est attribué un système optique de transmission commun (6).

11. Système de barrière lumineuse selon l'une des revendications 1 à 10, **caractérisé en ce qu'**il est conçu comme rideau lumineux (1).

12. Système de barrière lumineuse selon l'une des revendications 1 à 11, **caractérisé en ce qu'**il est conçu comme un capteur de sécurité.
